Europäisches Patentamt

European Patent Office

Office européen des brevets

(19)

(11) Publication number : **0 511 700 A1**

## (12) EUROPEAN PATENT APPLICATION

(21) Application number : **92201073.1**

(22) Date of filing : **14.04.92**

(51) Int. Cl.⁵ : **B60S 11/00, B66F 3/08**

(30) Priority : **22.04.91 NL 9100700**

(43) Date of publication of application :
**04.11.92 Bulletin 92/45**

(84) Designated Contracting States :
**BE DE DK FR GB NL SE**

(71) Applicant : **MEWAHO BEHEER B.V.**
**Hanzeweg 27**
**NL-7591 BK Denekamp (NL)**

(72) Inventor : **Hogeling, Gerhardus Jozef**
**Hanzeweg 27a**
**NL-7591 BK Denekamp (NL)**

(74) Representative : **Prins, Hendrik Willem et al**
**Octrooibureau Arnold & Siedsma**
**Sweelinckplein, 1**
**NL-2517 GK The Hague (NL)**

(54) **Jack support.**

(57)    The invention lies in the field of jacking up a vehicle, in particular a caravan (2).

The invention now offers an auxiliary device (1) for jacking up a vehicle, which auxiliary device is provided with a bar (7) with bending stiffness for coupling in transverse direction to a beam (3) forming part of the chassis of the vehicle by means of coupling means (4), which bar (7) has at a distance from these coupling means a support zone (18) onto which a jack (19) can engage from the underside.

FIG.1

EP 0 511 700 A1

The invention lies in the field of jacking up a vehicle, in particular a caravan.

In the use of known jacks for jacking up for instance a caravan the problem can occur that those parts of the chassis which lend themselves to engagement by a jack are difficult of access. Means have been proposed for instance for level positioning of a caravan on an irregular terrain which for instance engage on a tyre in order to exert an upward force on a lower lying wheel to thereby set the caravan in level position.

The invention is now based on the insight that it must be possible, by making use of an accessory available in every automobile, namely the jack itself, and a suitable auxiliary device, to also use this jack to jack up the caravan and set it in level position. It will otherwise be apparent that this insight is not limited to caravans but is also more widely applicable.

In order to lift for instance a caravan it is necessary to engage it on a relatively strong construction part, in particular a chassis beam. The remaining construction is normally not so mechanically rigid and strong that it is possible to use a jack without damaging the caravan. The problem then arises that, due to the comparatively compact structure and for instance the presence of support means for spare tyres and the like, these chassis beams are generally awkward of access.

The invention now offers an auxiliary device for jacking up a vehicle, for instance an automobile, a trailer or a caravan comprising a bar with bending stiffness for coupling in transverse direction to a beam forming part of the chassis of the vehicle by means of coupling means, which bar has at a distance from these coupling means a support zone onto which a jack can engage from the underside.

The bar with bending stiffness now provides the possibility of allowing the jack to engage at some distance to the side of the relevant chassis beam. The torsion with which the chassis beam is now loaded can generally be withstood very easily. The use of a slender element such as the bar with bending stiffness has the advantage that, even in relatively difficult circumstances such as in the case of the comparatively small space between a wheel and a spare wheel carried on the underside, the chassis beam can still be reached for the desired mechanical contact.

The auxiliary device can have the particular feature that the coupling means comprise a positioning hook to be placed on the underside behind the beam and a support for placing on the top against an outer surface of the beam. Such an embodiment is very suitable for typical chassis beams with a generally Z-shape having an upper flange protruding outward at the top and an inner flange protruding inward at the bottom. It will otherwise be apparent that the vertical distance between the positioning hooks and the support have to be sufficiently large that the applied moment can be withstood by the beam, while this distance must not be so great that the auxiliary device can no longer be accommodated.

After coupling on of the auxiliary device with the coupling means this device has to be supported for stable positioning on the outward protruding end. The user must however also have hands available to operate the jack. In order to contend with this potential inconvenience the invention also offers an auxiliary device characterized by supporting means for supporting connection of the beam to the vehicle.

A very simple embodiment is one in which the supporting means comprise magnet means present in the vicinity of the support.

In another embodiment this auxiliary device has the feature that the supporting means are embodied by a supporting element for connection to the end of the bar remote from the coupling means, which element can be coupled to an external part of the vehicle. Such a coupling means can be embodied as a for instance elastic band which is coupled to coupling profiles for the awning of the caravan. Other coupling means may also be considered suitable.

To make the distribution of forces as optimal as possible and to limit the localized pressure the embodiment is recommended in which the support zone has a considerable active surface and a considerable horizontal length.

In general, use is made of chassis beams of two types, namely one with a bottom flange of approximately 35 mm and another with a bottom flange having a length of about 30 mm. To enable accommodation of both types a variant can be used in which the mutual axial distance between the positioning hook and the support zone is adjustable. The embodiment is very simple which is characterized by at least one hole into which a pin with a head of pre-selected thickness can be inserted and fixed, for instance a bolt with a nut. To correspond with the previous embodiment the bolt head should have a thickness of approximately 5 mm.

A strong construction is obtained with an auxiliary device whereof the bar is a tubular profile which is or can be closed on both sides with a plug.

The bar can have on the underside a disc-like part for accommodating a normal jack.

A variant is characterized by an insert piece which is accommodated in the tubular profile and the internal shape of which is adapted to the pin of a bar jack.

Constructionally simple and very strong and rigid is the variant characterized in that the positioning hook comprises two mutually coupled strips which are fork-like in horizontal section, are connected to the bar on the broad side of the fork and which together form a hook part on the narrow side of the fork.

The invention will now be elucidated with reference to the annexed drawing, wherein:

fig. 1 shows a partly broken away perspective view of an auxiliary device according to the invention in the operative situation;

fig. 2 shows a partly broken away perspective view of a variant;

fig. 3 is a partly broken away perspective view of a further embodiment; and

fig. 4 shows on enlarged scale the device of fig. 1 with three adjusting bolts.

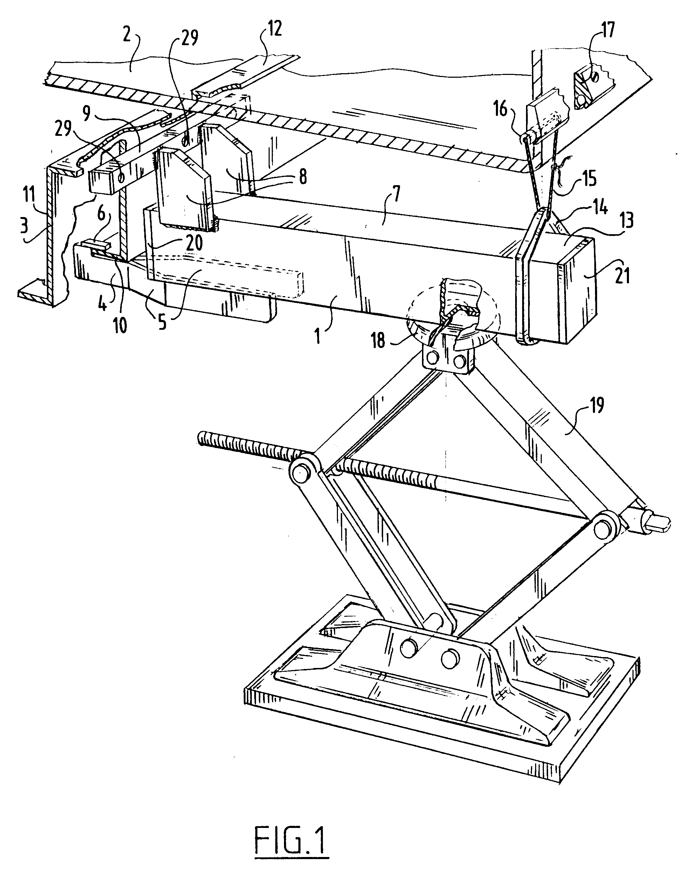

Fig. 1 shows an auxiliary device 1 for jacking up a caravan 2 (of which only a wall portion can be seen). The auxiliary device 1 comprises a hook part 4 coupled to a Z-chassis beam 3 of the caravan and consisting of two fork-like, mutually connected metal strips 5 with a lip 6, which strips 5 are fixedly welded to a rectangular box girder 7 which bears on its upper side two shores 8 which in turn support a cross beam 9.

As shown in fig. 1, the hook part 5 hooks round the inward protruding flange 10 of the Z-beam 3, while the cross beam 9 supports against the body 11 of the Z-beam at some distance from the outward protruding upper flange 12 of the Z-beam. Arranged on the free end 13 of the box girder 7 is an elastic band 14 which is inserted by means of a cord 15 and a cylinder 16 into a profile 17 which is present on the outside of caravan 2 and which normally serves for connection of an awning.

A disc 18 placed on the underside of the box girder 7 serves to accommodate a typical jack 19.

The box girder is closed on both sides by means of a plug 20, 21.

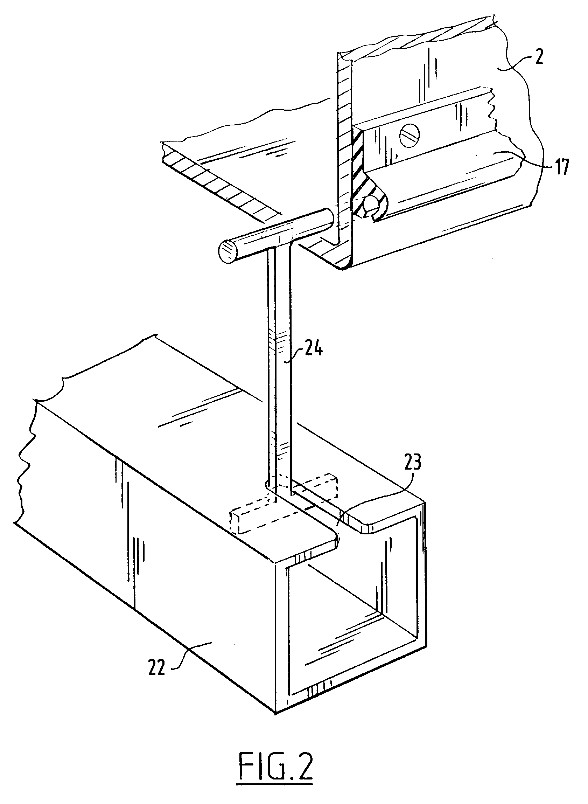

Fig. 2 shows an alternative in which a box girder 22 has on its outer free end an upper channel 23 with which an H-shaped coupling element 24 can be coupled to the profile 17.

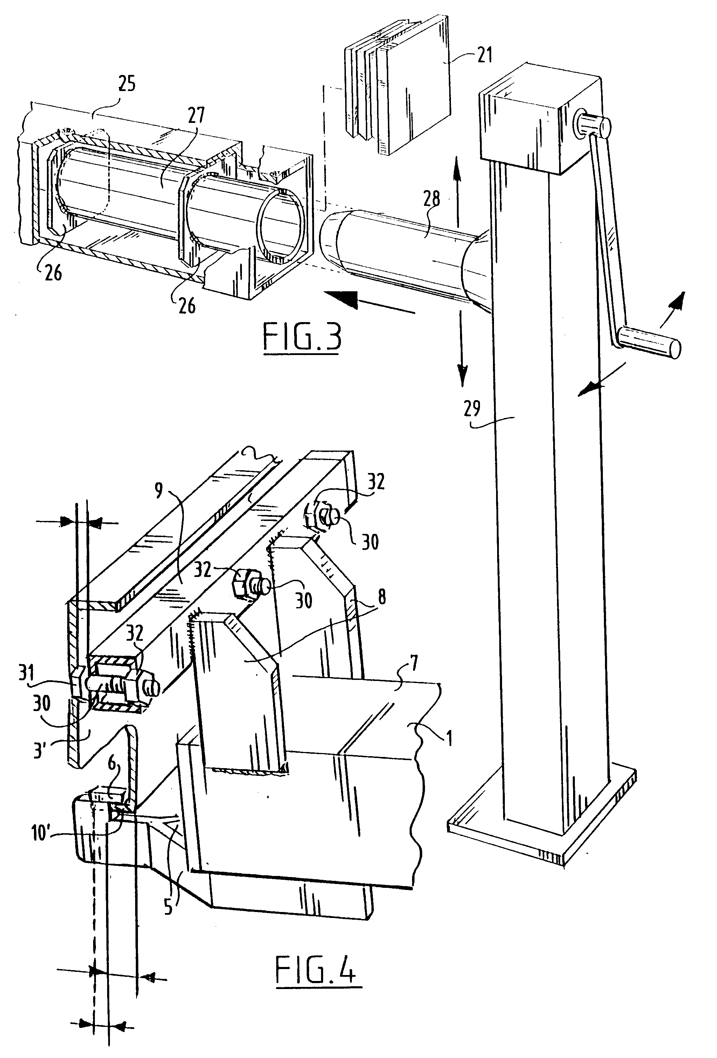

Fig. 3 shows a variant. A box girder 25 is provided internally with a tubular part 27 which is supported by flanges 26 and the inner dimensions of which are adapted to the pin 28 of a bar jack 29.

Fig. 4 shows the manner in which the device 1 of fig. 1 can be adapted for a Z-beam 3′ whereof the lower flange 10′ has a width of 30 mm, while the flange 10 according to fig. 1 has a width of 35 mm. In order to still hold the box girder 7 in roughly horizontal position also in the situation of fig. 4, bolts 30 are inserted through the three through-holes 29 shown in fig. 1, the heads 31 of which bolts have an axial dimension of approximately 5 mm. The bolts are fixed in place in the usual manner by means of nuts 32.

Attention is drawn to the fact that other forms of chassis beam are conceivable. The inner end of the flange 10, 10′ can for instance have an upward protruding standing edge. It will be apparent that the height of the hook part 4, and therewith the position of the lip 6, is chosen correspondingly.

The construction according to fig. 1 and 4 of the auxiliary device 1 according to the invention is also advantageous in another respect. On their active hooking end with which they can co-act with a chassis beam the two strips 5 are mutually connected to a single support strip. This support strip has a comparatively small size in the lengthwise direction of the chassis beam for supporting. It is particularly the case that there is a small supporting surface when the strips 5 are mutually attached by welding and there is a more or less cylindrical weld seam extending on the upper side. In this case the auxiliary device according to the invention can be employed without adaptation on the left or right-hand side of a caravan, also in the region where the chassis beams form an angle with the longitudinal axis of the caravan. A round bar for instance could also be used for this purpose.

## Claims

1. Auxiliary device for jacking up a vehicle, for instance an automobile, a trailer or a caravan, comprising a bar with bending stiffness for coupling in transverse direction to a beam forming part of the chassis of the vehicle by means of coupling means, which bar has at a distance from these coupling means a support zone onto which a jack can engage from the underside.

2. Auxiliary device as claimed in claim 1, **characterised in that** the coupling means comprise a positioning hook to be placed on the underside behind the beam and a support for placing on the top against an outer surface of the beam.

3. Auxiliary device as claimed in claim 1, **characterised by** supporting means for supporting connection of the beam to the vehicle.

4. Auxiliary device as claimed in claim 3, **characterised in that** the supporting means comprise magnet means present in the vicinity of the support.

5. Auxiliary device as claimed in claim 3, **characterised in that** the supporting means are embodied as a supporting element for connection to the end of the bar remote from the coupling means, which element can be coupled to an external part of the vehicle.

6. Auxiliary device as claimed in claim 1, **characterised in that** the support zone has a considerable active surface and a considerable horizontal length.

7. Auxiliary device as claimed in claim 2, **characterised in that** the mutual axial distance between the positioning hook and the support zone is adjustable.

8. Auxiliary device as claimed in claim 7, **characterised by** at least one hole into which a pin with a head of pre-selected thickness can be inserted and fixed, for instance a bolt with a nut.

9. Auxiliary device as claimed in claim 1, **characterised in that** the bar is a tubular profile which is or can be closed on both sides by means of a plug.

10. Auxiliary device as claimed in claim 9, **characterised by** an insert piece which is accommodated in the tubular profile and the internal shape of which is adapted to the pin of a bar jack.

11. Auxiliary device as claimed in claim 2, **characterised in that** the positioning hook comprises two mutually coupled strips which are fork-like in horizontal section, are connected to the bar on the wide side of the fork and which together form a hook part on the narrow side of the fork.

FIG.1

FIG.2

25

27

28

26

26

21

29

FIG.3

9

32

32

30

32

30

8

31

7

30

3'

6

1

10'

5

FIG.4

**European Patent Office**

# EUROPEAN SEARCH REPORT

Application Number

EP 92 20 1073

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 753 550 (CRISWELL) <br> * the whole document * <br> --- | 1,2,6 | B60S11/00 <br> B66F3/08 |
| A | GB-A-2 170 459 (BULLOCK) <br> * the whole document * <br> --- | 1 | |
| A | GB-A-2 027 654 (APPLIED POWER INC.) <br> * the whole document * <br> --- | 1,8 | |
| A | US-A-4 014 517 (KEAGLE) <br> * the whole document * <br> ----- | 1,6 | |
| | | | TECHNICAL FIELDS SEARCHED (Int. Cl.5) <br><br> B60S <br> B66F |

The present search report has been drawn up for all claims

| Place of search | Date of completion of the search | Examiner |
|---|---|---|
| THE HAGUE | 28 JULY 1992 | GEYER J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P0401)